# EUROPEAN PATENT APPLICATION

(11) **EP 4 693 540 A1**
(43) Date of publication of application: **11.02.2026**
(21) Application number: 24210606.0
(22) Date of filing: 04.11.2024
(51) Int. Cl.: H01M 10/04

(54) **BATTERY MANUFACTURING APPARATUS AND METHOD**

(30) Priority: 05.08.2024 KR 20240103924
(71) Applicant: SAMSUNG SDI CO., LTD., Yongin-si, Gyeonggi-do 17084 (KR)
(72) Inventor: KIM, Man Jin, 16678 Suwon-si (KR); LEE, Sung Ho, 16678 Suwon-si (KR)
(74) Representative: Marks & Clerk LLP

(57) **Abstract**

A battery manufacturing apparatus includes a can gripper configured to contact and fix a can, a stack gripper disposed at a side of the can gripper, the stack gripper being configured to fix a stack to be inserted into the can, and a stack pusher configured to contact the stack and to move the stack toward the can gripper.

## Description

### BACKGROUND

### 1. Field

The present disclosure relates to a battery manufacturing apparatus and method.

### 2. Description of the Related Art

Secondary batteries are capable of being repeatedly charged and discharged, unlike primary batteries that cannot be recharged. Low-capacity secondary batteries may be used in small portable electronic devices such as smartphones, feature phones, notebook computers, digital cameras, and camcorders, and large-capacity secondary batteries may be used as power sources for driving motors of hybrid vehicles, electric vehicles, and the like and as batteries for power storage. Such a secondary battery may include an electrode assembly including a positive electrode and a negative electrode, a can for accommodating the electrode assembly, a stack terminal connected to the electrode assembly, and the like.

There are many ways to insert an electrode assembly into a can of a secondary battery. The electrode assembly may be inserted into the can from top to bottom or inserted into the can from the side. When the electrode assembly is inserted into the can through the side of the can, since the electrode assembly is pressed and inserted into the can, there are problems that the electrode assembly is likely to be damaged and that foreign matter is likely to be introduced into the can during the insertion process.

The above information disclosed in this Background section is provided for enhancement of understanding of the background of the present disclosure, and therefore, it may contain information that does not constitute related (or prior) art.

### SUMMARY

The present invention is directed to providing a battery manufacturing apparatus and method for minimizing damage to a stack during a battery manufacturing process.

In addition, the present invention is directed to providing a battery manufacturing apparatus and method for minimizing the introduction of foreign matter into a can during a battery manufacturing process.

According to an aspect of the present invention, there is provided a battery manufacturing apparatus including a can gripper which comes into contact with and is fixed to a can, a stack gripper which is disposed at one side of the can gripper and fixes a stack inserted into the can, and a stack pusher which comes into contact with the stack and moves the stack to the can.

The can may include long can sides disposed to face each other and short can sides connecting the long can sides and disposed to face each other, and the can gripper may come into contact with the long can sides.

The stack may include a long stack side in contact with the stack gripper and a short stack side in contact with the stack pusher.

The battery manufacturing apparatus may further include a shooting guide part which is disposed between the can gripper and the stack gripper and guides the stack to be inserted into the can.

The shooting guide part may include a plurality of shooting guide rollers disposed to face each other, and a distance between the facing shooting guide rollers may decrease from the stack gripper to the can gripper.

The can gripper may include a fixed can gripper part and a movable can gripper part which is disposed to face the fixed can gripper part and moves toward or away from the fixed can gripper part.

The can gripper may include a can fixing part which fixes the fixed can gripper part and further include a can gripper close contact part which moves the movable can gripper part toward the fixed can gripper part.

The stack gripper may include a fixed stack gripper part and a movable stack gripper part which is disposed to face the fixed stack gripper part and moves toward or away from the fixed stack gripper part.

The stack gripper may include a stack fixing part which fixes the fixed stack gripper part and further include a stack gripper close contact part which moves the movable stack gripper part toward the fixed stack gripper part.

The battery manufacturing apparatus may further include a stack friction reducing part which is formed on the fixed stack gripper part and the movable stack gripper part and reduces friction between the stack gripper and the stack.

The battery manufacturing apparatus may further include a foreign matter discharge part which is disposed between the can gripper and the stack gripper and suctions foreign matter that is detached from the stack.

The foreign matter discharge part may generate a negative pressure to suction the foreign matter.

The battery manufacturing apparatus may further include a stack support which is disposed at the other side of the can gripper and comes into contact with the stack inserted into the can to restrict movement of the stack.

The stack may include a stack terminal, and the stack support may be spaced apart from the stack terminal and may come into contact with the stack.

The stack may include a stack terminal, and the stack pusher may be spaced apart from the stack terminal and may come into contact with the stack.

According to another aspect of the present invention, there is provided a battery manufacturing method, including a can preparation operation in which a can is disposed in a can gripper, a stack preparation operation in which a stack is disposed in a stack gripper disposed at one side of the can gripper, and a stack insertion operation in which the stack is inserted into the can using a stack pusher that comes into contact with the stack.

In the stack insertion operation, the stack may pass through a shooting guide part which is disposed between the can gripper and the stack gripper and guides the stack to be inserted into the can.

In the stack insertion operation, foreign matter that is detached from the stack may be suctioned by a foreign matter discharge part disposed between the can gripper and the stack gripper.

In the stack insertion operation, a stack support disposed at the other side of the can gripper may come into contact with the stack inserted into the can to restrict movement of the stack.

In the stack insertion operation, the stack may come into contact with a stack friction reducing part disposed in the stack gripper to reduce friction between the stack and the stack gripper.

At least some of the above and other features of the invention are set out in the claims.

### BRIEF DESCRIPTION OF THE DRAWINGS

The drawings attached to this specification illustrate some embodiments of the present disclosure, and further describe aspects and features of the present disclosure together with the detailed description of the present disclosure. However, the present disclosure should not be construed as being limited to the drawings.
FIG. 1 is a plan view illustrating a battery manufacturing apparatus according to an embodiment;
FIG. 2 is a front view illustrating the battery manufacturing apparatus according to an embodiment;
FIG. 3 is a side view illustrating a shooting guide at a first time point according to an embodiment;
FIG. 4 is a side view illustrating the shooting guide at a second time point according to an embodiment;
FIG. 5 is a plan view illustrating a battery manufacturing apparatus in which a can is not disposed yet according to an embodiment;
FIG. 6 is a plan view illustrating a battery manufacturing apparatus in which a can is disposed according to an embodiment;
FIG. 7 is a plan view illustrating a battery manufacturing apparatus in which a stack is being disposed according to an embodiment;
FIG. 8 is a plan view illustrating a battery manufacturing apparatus in which a stack is being inserted into a can according to an embodiment;
FIG. 9 is a plan view illustrating the battery manufacturing apparatus in which a stack is completely inserted into a can according to an embodiment;
FIG. 10 is a plan view illustrating a first example of a gripper close contact part connected to each of a can gripper and a stack gripper according to embodiments;
FIG. 11 is a plan view illustrating a second example of a gripper close contact part connected to each of a can gripper and a stack gripper according to embodiments;
FIG. 12 is a side view illustrating the second example of the gripper close contact part connected to each of the can gripper and the stack gripper according to embodiments;
FIG. 13 is a plan view illustrating a first example of a stack friction reducing part disposed in a stack gripper according to embodiments;
FIG. 14 is a side view illustrating the first example of the stack friction reducing part disposed in the stack gripper according to embodiments;
FIG. 15 is a side view illustrating a second example of a stack friction reducing part disposed in a stack gripper according to embodiments;
FIG. 16 is a plan view illustrating a third example of a stack friction reducing part disposed in a stack gripper according to embodiments;
FIG. 17 is a side view illustrating the third example of the stack friction reducing part disposed in the stack gripper according to embodiments; and
FIG. 18 is a flowchart illustrating a method of manufacturing a battery according to an embodiment.

### DETAILED DESCRIPTION OF THE DRAWINGS

Herein, some embodiments of the present disclosure will be described, in further detail, with reference to the accompanying drawings. The terms or words used in this specification and claims should not be construed as being limited to the usual or dictionary meaning and should be interpreted as meaning and concept consistent with the technical idea of the present disclosure based on the principle that the inventor can be his/her own lexicographer to appropriately define the concept of the term.

The embodiments described in this specification and the configurations shown in the drawings are provided as some example embodiments of the present disclosure and do not represent all of the technical ideas, aspects, and features of the present disclosure. Accordingly, it is to be understood that there may be various equivalents and modifications that may replace or modify the embodiments described herein at the time of filing this application.

It is to be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc may be exaggerated for clarity of illustration. The same reference numerals designate the same or like elements. As used herein, the term "and/or" includes any and all combinations of one or more of the associated listed items. Further, the use of "may" when describing embodiments of the present disclosure relates to "one or more embodiments of the present disclosure. "Expressions, such as "at least one of' and "any one of," when preceding a list of elements, modify the entire list of elements and do not modify the individual elements of the list. When phrases such as "at least one of A, B, and C," "at least one of A, B, or C," "at least one selected from a group of A, B, and C," or "at least one selected from among A, B, and C" are used to designate a list of elements A, B, and C, the phrase may refer to any and all suitable combinations or a subset of A, B, and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It is to be understood that, although the terms "first," "second," "third," etc. may be used herein to describe various elements, components, regions, layers and/or the sections, these elements, components, regions, layers and/or the sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It is to be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (e.g., rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It is to be further understood that the terms "includes," "including," "comprises," and/or "comprising," when used in this specification, specify the presence of stated features, integers, steps, operations, elements and/or the components but do not preclude the presence or addition of one or more other features, integers, steps, operations, elements, components and/or the groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are "substantially the same." Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

When an arbitrary element is referred to as being disposed (or located or positioned) on the "above (or below)" or "on (or under)" a component, it may mean that the arbitrary element is placed in contact with the upper (or lower) surface of the component and may also mean that another component may be interposed between the component and any arbitrary element disposed (or located or positioned) on (or under) the component.

In addition, it is to be understood that when an element is referred to as being "coupled," "linked," or "connected" to another element, the elements may be directly "coupled," "linked," or "connected" to each other, or one or more intervening elements may be present therebetween, through which the element may be "coupled," "linked," or "connected" to another element. In addition, when a part is referred to as being "electrically coupled" to another part, the part may be directly electrically connected to another part or one or more intervening parts may be present therebetween such that the part and the another part are indirectly electrically connected to each other.

Throughout the specification, when "A and/or B" is stated, it means A, B, or A and B, unless otherwise stated. That is, "and/or" includes any or all combinations of a plurality of items enumerated. When "C to D" is stated, it means C or more and D or less, unless otherwise specified.

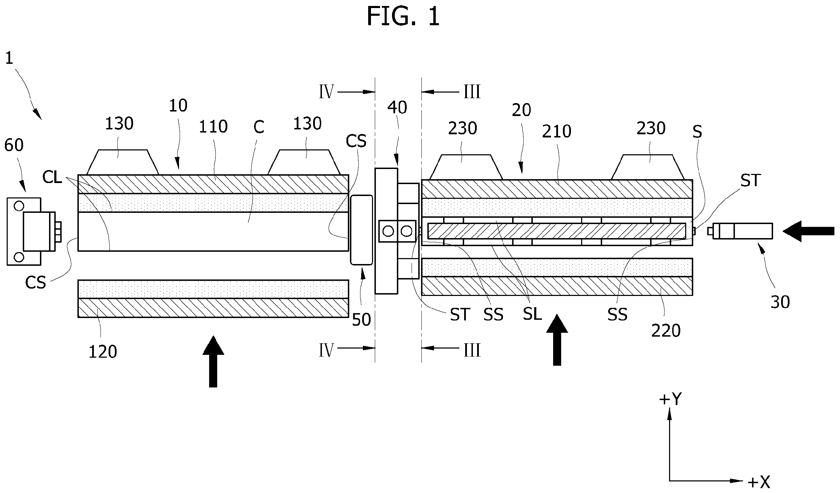

Referring to FIGS. 1 to 4, a battery manufacturing apparatus 1 will be schematically described.

The battery manufacturing apparatus 1 may include a can gripper 10, a stack gripper 20, and a stack pusher 30. The battery manufacturing apparatus 1 may insert a stack S into a can C. According to an embodiment, the battery manufacturing apparatus 1 may insert the stack S into the can C by moving the stack S in a direction parallel to a longitudinal direction of the can C (e.g., along the X-axis direction in FIG. 1).

The stack S may be defined as a term encompassing an electrode assembly implemented in a secondary battery. The stack S may be an electrode assembly having a jelly roll type structure, a stacked type structure (e.g., a type in which a positive electrode, a negative electrode, and a separator are stacked), or the like. The can C may be a case (e.g., a container or a pouch accommodating the stack S).

The can gripper 10 may fix (e.g., secure or stably hold) the can C. The can gripper 10 may come into contact with a first side and a second side, e.g. the other side to the first side, of the can C to fix the can C (e.g., the can gripper 10 may contact opposite sides of the can C to securely hold the can C).

The stack gripper 20 may press the stack S. The stack gripper 20 may come into contact with a first side and a second side, e.g. the other side to the first side, of the stack S to fix the stack S (e.g., the stack gripper 20 may contact opposite sides of the stack S to securely hold the stack S).

The stack pusher 30 may come into contact with the stack S to move the stack S. The stack pusher 30 may come into contact with the stack S and move the stack S towards the can C (e.g., in the direction of the arrow extending in the X-axis direction in FIG. 1). The stack S may be inserted into the can C.

The battery manufacturing apparatus 1 may further include a shooting guide part 40 (i.e., a shooting guide), a foreign matter discharge part 50 (e.g., a foreign matter discharger), and a stack support 60.

The shooting guide part 40 may be disposed between the can gripper 10 and the stack gripper 20. The stack S may move to pass through the shooting guide part 40. The shooting guide part 40 may guide the movement of the stack S. According to an embodiment, the shooting guide part 40 may come into contact with the stack S to maintain a width (e.g., in the Y-axis direction) of the stack S to be a certain dimension or less. Accordingly, friction occurring while the stack S is inserted into the can C can be minimized.

The foreign matter discharge part 50 may remove (e.g., suction or extract) foreign matter that is detached from the stack S. The foreign matter discharge part 50 may be provided as an opening in which a negative pressure is generated to remove the foreign matter. The foreign matter discharge part 50 may be disposed adjacent to the can gripper 10 or under the shooting guide part 40.

The stack support 60 may be disposed on a side (e.g., in the -X-axis direction) of the can C (e.g., the stack support 60 may be disposed at a side of the can C that is opposite the stack gripper 20). The stack support 60 may come into contact with the stack S inserted into the can C to restrict the movement of the stack S (e.g., the stack support 60 may contact the stack S to stop movement of the stack S after insertion into the can C). Accordingly, the stack S may be disposed at a desired location in the can C by a worker.

The can gripper 10 may fix the can C, and the stack gripper 20 may press the stack S to align the stack S with the can C. The stack S, aligned with the can C, may be moved toward the can C and inserted into the can C by the stack pusher 30. The stack S moved by the stack pusher 30 may pass through the shooting guide part 40 disposed between the can gripper 10 and the stack gripper 20, and the shooting guide part 40 may come into contact with the stack S to maintain the width (e.g., in the Y-axis direction) of the stack S to be a set dimension or less. The stack S passing through the shooting guide part 40 may be inserted into the can C. The foreign matter that is detached from the stack S may be removed through the foreign matter discharge part 50. The stack S inserted into the can C may come into contact with the stack support 60 and the movement of the stack S may be restricted.

Using the battery manufacturing apparatus 1 described above, damage to the stack S can be minimized, and battery cells with a low failure rate can be manufactured.

Hereinafter, a detailed structure of the battery manufacturing apparatus 1 will be described.

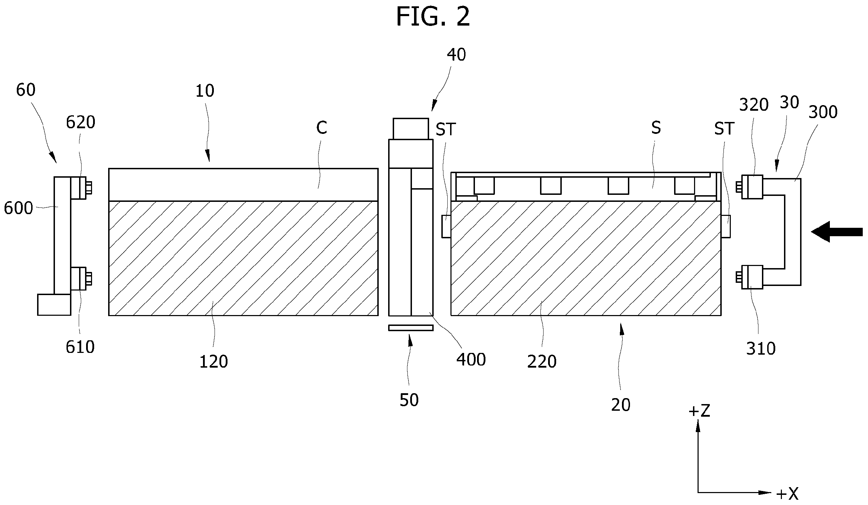

Referring to FIGS. 1 and 2, the can gripper 10 may include a fixed can gripper part 110, a movable can gripper part 120, and a can fixing part 130.

The fixed can gripper part 110 (e.g., a stationary gripper) may be fixed (e.g., stationary) at a set position. The movable can gripper part 120 (e.g., a movable gripper) may move with respect to the fixed can gripper part 110. According to an embodiment, the movable can gripper part 120 may move along the Y-axis direction in FIG. 1, and as the movable can gripper part 120 moves, a distance between the fixed can gripper part 110 and the movable can gripper part 120 in the Y-axis direction may change.

The can fixing part 130 (e.g., a fixer) may fix the fixed can gripper part 110. The can fixing part 130 may be fixed at a set location, and may be connected to the fixed can gripper part 110. As the can fixing part 130 and the fixed can gripper part 110 are connected, the fixed can gripper part 110 may be fixed to the can fixing part 130.

The can C may be disposed between the fixed can gripper part 110 and the movable can gripper part 120 (FIG. 1). The can C may be formed in a substantially hexahedral shape. When the can C is viewed in the Z-axis direction, the can C may have a substantially quadrangular shape.

According to an embodiment, the can C may include long can sides CL disposed to face each other and short can sides CS which connect the long can sides CL and are disposed to face each other. For example, referring to FIGS. 1 to 4, the long can sides CL may extend in the X-axis direction, and the short can sides CS may extend in the Y-axis direction perpendicularly to the long can sides CL.

The long can sides CL may come into contact with the can gripper 10. According to an embodiment, the opposite long can sides CL may come into contact with the fixed can gripper part 110 and movable can gripper part 120, respectively. As the long can sides CL are in contact with the fixed can gripper part 110 and the movable can gripper part 120, the can C may be fixed to the can gripper 10. For example, the movable can gripper part 120 may move towards the fixed can gripper part 110 to hold (e.g., press) the can C therebetween, so the can C may be fixed by the can gripper 10 to be in a stationary state.

The stack gripper 20 may be disposed adjacent to (e.g., at one side of) the can gripper 10. The stack gripper 20 may include a fixed stack gripper part 210 (e.g., a stationary stack gripper), a movable stack gripper part 220 (e.g., a movable stack gripper), and a stack fixing part 230 (e.g., a stack fixer).

The fixed stack gripper part 210 may be fixed at a set location. The movable stack gripper part 220 may move with respect to the fixed stack gripper part 210. For example, according to an embodiment, the movable stack gripper part 220 may move in the Y-axis direction, and as the movable stack gripper part 220 moves, a distance between the fixed stack gripper part 210 and the movable stack gripper part 220 may change.

The stack fixing part 230 may fix the fixed stack gripper part 210. The stack fixing part 230 may be fixed to a set location and connected to the fixed stack gripper part 210. As the stack fixing part 230 and the fixed stack gripper part 210 are connected, the fixed stack gripper part 210 may be fixed to the stack fixing part 230.

The stack S may be disposed between the fixed stack gripper part 210 and the movable stack gripper part 220. The stack S may be provided in a substantially hexahedral shape. When the stack S is viewed in the Z-axis direction (FIG. 2), the stack S may have a substantially quadrangular shape.

According to an embodiment, the stack S may include long stack sides SL disposed to face each other and short stack sides SS which connect the long stack sides SL and are disposed to face each other. Referring to FIGS. 1 to 4, the long stack sides SL may extend in the X-axis direction, and the short stack sides SS may extend in the Y-axis direction and thus perpendicularly to the long stack sides SL.

The long stack sides SL may come into contact with the stack gripper 20. According to an embodiment, the long stack sides SL may come into contact with the fixed stack gripper part 210 and the movable stack gripper part 220. As the long stack sides SL come into contact with the fixed stack gripper part 210 and the movable stack gripper part 220, the stack S may be fixed to the stack gripper 20. For example, the movable stack gripper part 220 may move toward the fixed stack gripper part 210 to hold (e.g., to press) the stack S, so the width (e.g., in the Y-axis direction) of the stack S may be maintained to be smaller than a dimension between the fixed stack gripper part 210 and the movable stack gripper part 220.

The stack pusher 30 may be disposed at one side (e.g., in the X-axis direction) of the stack gripper 20. The stack pusher 30 may come into contact with the stack S to move the stack S in one direction (e.g., in the X-axis direction). According to an embodiment, the stack pusher 30 may move the stack S disposed inside the stack gripper 20 towards the can C disposed inside the can gripper 10. The stack pusher 30 may not come into contact (e.g., direct contact) with a stack terminal ST disposed on the stack S (e.g., in a center region of the stack S facing the stack pusher 30) but may come into contact (e.g., direct contact) with another portion of the stack S and may move the stack S. As the stack pusher 30 and the stack terminal ST do not come into contact (e.g., direct contact) with each other, the stack terminal ST may not be damaged.

In detail, referring to FIG. 2, the stack pusher 30 may include a stack pusher body 300, a first stack pressing part 310, and a second stack pressing part 320. For example, the stack pusher body 300 may extend between the first stack pressing part 310 and the second stack pressing part 320 to define a "C" shape. The stack pusher body 300 may come into contact with the stack S. It is noted that FIG. 2 illustrates the stack S protruding above the movable stack gripper part 220, as viewed from a side view, and both the first stack pressing part 310 and the second stack pressing part 320 of the stack pusher 30 contact the stack S (i.e., the first stack pressing part 310 contacts the stack S behind the movable stack gripper part 220).

According to an embodiment, the first stack pressing part 310 and the second stack pressing part 320 may come into contact with the stack S. The first stack pressing part 310 and the second stack pressing part 320 may be spaced apart from the stack terminal ST and may come into contact with portions of the stack S other than the stack terminal ST. According to an embodiment, when the stack pusher body 300 is disposed to have the first stack pressing part 310 and the second stack pressing part 320 contact the stack S, the stack terminal ST is located between the first stack pressing part 310 and the second stack pressing part 320 (e.g., the stack terminal ST extends from the stack S behind the movable stack gripper part 220 in FIG. 2). Therefore, as the stack pusher body 300 comes into contact with the stack S through the first stack pressing part 310 and the second stack pressing part 320, the likelihood that the stack S is damaged may be reduced, and the likelihood that the stack terminal ST is damaged may be reduced.

The shooting guide part 40 may be disposed between the can gripper 10 and the stack gripper 20, and may guide the movement of the stack S. The shooting guide part 40 may be moved, may be disposed between the can gripper 10 and the stack gripper 20, and may be used in a manufacturing process.

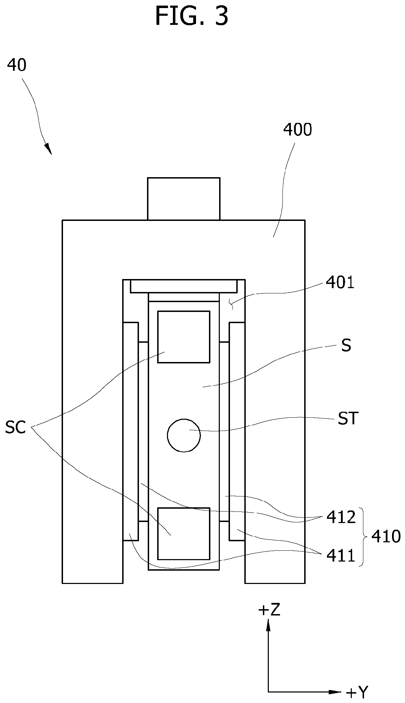

In detail, referring to FIG. 3, the shooting guide part 40 may include a shooting guide body 400 and a shooting guide roller 410. The shooting guide body 400 may include an opening (e.g., the shooting guide body 400 may have a cross-section of Π), and the stack S may move through the opening (e.g., the stack S may move between the legs of Π). As the stack S moves through the opening formed in the shooting guide body 400, the stack S may come into contact with the shooting guide body 400. As the stack S comes into contact with the shooting guide body 400, the movement direction of the stack S may be restricted, and the shooting guide body 400 may guide the movement of the stack S. For example, according to an embodiment, the shooting guide body 400 may guide the stack S to move in the X-axis direction (e.g., out of the page in FIG. 3).

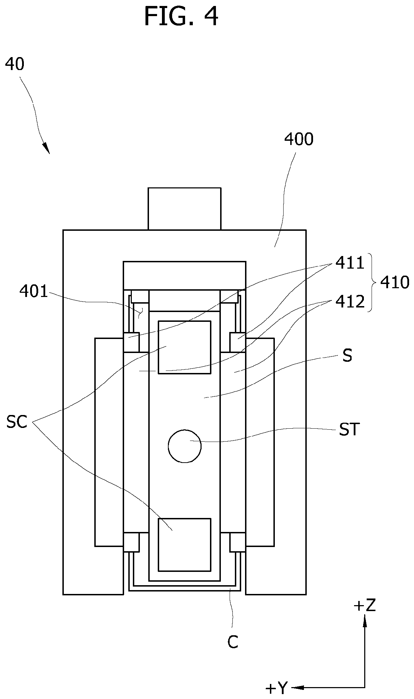

The shooting guide roller 410 may rotate (e.g., rotate about its own axis) while in contact with the stack S. Accordingly, friction between the shooting guide roller 410 and the stack S may be minimized, and damage to the stack S may be minimized. The shooting guide roller 410 may be disposed in the opening formed in the shooting guide body 400. The shooting guide roller 410 will be described in more detail below with reference to FIGS. 3 and 4.

Referring to FIG. 1, the foreign matter discharge part 50 may be disposed between the can gripper 10 and the stack gripper 20 and may remove foreign matter generated during a battery manufacturing process. Accordingly, a failure rate of batteries manufactured by the battery manufacturing apparatus 1 may be reduced.

The foreign matter discharge part 50 may be provided as an opening and may generate a negative pressure (e.g., the foreign matter discharge part 50 may be a vacuum pump). As the negative pressure is generated by the foreign matter discharge part 50, foreign matter generated during the battery manufacturing process may move to the foreign matter discharge part 50. The foreign matter discharge part 50 may be disposed under (e.g., in a -Z-axis direction of) the can C and/or the stack S.

The foreign matter discharge part 50 may remove foreign matter detached from the stack S. According to an embodiment, the foreign matter discharge part 50 may be disposed under the shooting guide part 40 and may remove the foreign matter that is detached from the stack S while the stack S passes through the shooting guide part 40.

The stack support 60 may be disposed at a side of the can gripper 10 opposite to the stack gripper 20 (e.g., in a -X-axis direction relative to the can gripper 10 in FIG. 1). The stack support 60 may be disposed at the other side of the can gripper 10 and may contact the stack S. As such, the stack S may come into contact with the stack support 60 so that movement of the stack S in one direction (e.g., the -X-axis direction) may be restricted.

As the stack support 60 comes into contact with the stack S, and the movement of the stack S in one direction (e.g., the -X-axis direction) is restricted, the stack S may be disposed at a location in the can C desired by the worker. Accordingly, the degree of completion of the battery manufactured by the battery manufacturing apparatus 1 can be improved.

Referring to FIG. 2, the stack support 60 may include a stack support body 600, a first stack support part 610, and a second stack support part 620. The stack support body 600 may extend between the first stack support part 610 and the second stack support part 620 to define a "C" shape.

The stack support body 600 may come into contact with the stack S. According to an embodiment, the first stack support part 610 and the second stack support part 620 may come into contact with the stack S. The first stack support part 610 and the second stack support part 620 may be spaced apart from the stack terminal ST and may come into contact with portions of the stack S other than the stack terminal ST According to an embodiment, when the stack support body 600 is disposed to have the first stack support part 610 and the second stack support part 620 contact the stack S, the stack terminal ST is located between the first stack support part 610 and the second stack support part 620. Therefore, as the stack support body 600 comes into contact with the stack S through the first stack support part 610 and the second stack support part 620, the likelihood that the stack S is damaged can be reduced, and the likelihood that the stack terminal ST is damaged can be reduced.

Referring to FIGS. 3 and 4, a detailed structure of the shooting guide part 40 will be described. FIGS. 3 and 4 illustrate cross-sectional views along lines III-III and IV-IV in FIG. 1, respectively.

The shooting guide part 40 may include a shooting guide opening 401 formed in the shooting guide body 400. The stack S may move through the shooting guide opening 401 formed in the shooting guide body 400. According to an embodiment, the stack S may be moved by the stack pusher 30, may pass through the shooting guide opening 401, and may be inserted into the can C.

The stack S may include a stack contact part SC that comes into contact with the stack pusher 30 and/or the stack support 60. According to an embodiment, the stack contact part SC may come into contact with the first stack pressing part 310 and/or the second stack pressing part 320 of the stack pusher 30 or with the first stack support part 610 and/or the second stack support part 620 of the stack support 60.

The stack contact part SC may protect the stack S. The stack contact part SC may be provided in a plate shape. As the stack contact part SC is disposed on the stack S and comes into contact with stack pusher 30 and/or the stack support 60, damage to the stack S can be prevented.

The shooting guide roller 410 may be disposed in the shooting guide body 400. As the shooting guide roller 410 may rotate (e.g., rotate about its own axis), friction between the shooting guide roller 410 and the stack S can be minimized.

The shooting guide roller 410 may come into contact with the stack S passing through the shooting guide opening 401 to adjust the width (e.g., in the Y-axis direction) of the stack S. According to an embodiment, as the stack S comes into contact with the shooting guide roller 410, the width (e.g., in the Y-axis direction) of the stack S may be maintained to be a set dimension or less. According to an embodiment, the width of the stack S may be maintained to have a dimension corresponding to a width (e.g., in the Y-axis direction) of the can C.

The shooting guide roller 410 may be provided as a plurality of shooting guide rollers 410. The plurality of shooting guide rollers 410 may be disposed to face each other. A distance between the facing shooting guide rollers 410 (e.g., in the Y-axis direction) may decrease from the stack gripper 20 to the can gripper 10 (e.g., along the X-axis direction).

According to an embodiment, the shooting guide roller 410 may include a shooting guide first roller 411 and a shooting guide second roller 412. The shooting guide first roller 411 may be disposed closer to the stack gripper 20 than the shooting guide second roller 412 is (e.g., along the X-axis direction). As the shooting guide first roller 411 is disposed closer to the stack gripper 20 than the shooting guide second roller 412 is, the stack S moving from the stack gripper 20 to the can gripper 10 may first come into contact with the shooting guide first roller 411 and then come into contact with the shooting guide second roller 412.

The shooting guide first roller 411 may be provided as a plurality of shooting guide first rollers 411. According to an embodiment, the shooting guide first rollers 411 may be disposed to face each other in the shooting guide opening 401.

The shooting guide second roller 412 may be provided as a plurality of shooting guide second rollers 412. According to an embodiment, the shooting guide second rollers 412 may be disposed to face each other in the shooting guide opening 401.

For example, referring to FIG. 4, a distance (e.g., in the Y-axis direction) between the facing shooting guide first rollers 411 may be provided to be greater than a distance (e.g., in the Y-axis direction) between the facing shooting guide second rollers 412 (e.g., a width of each of the shooting guide first rollers 411 in the Y-axis direction may be larger than a width of each of the shooting guide second rollers 412 in the Y-axis direction). Accordingly, a width (e.g., in the Y-axis direction) of the stack S disposed between the shooting guide first rollers 411 may be provided to be greater than a width (e.g., in the Y-axis direction) of the stack S disposed between the shooting guide second rollers 412. The width of the stack S may be reduced by the shooting guide roller 410 while passing through the shooting guide part 40.

As described above, as the width of the stack S is reduced while the stack S passes through the shooting guide part 40, the stack S can be easily inserted into the can C. In addition, the amount of foreign matter that is detached from the stack S can be reduced.

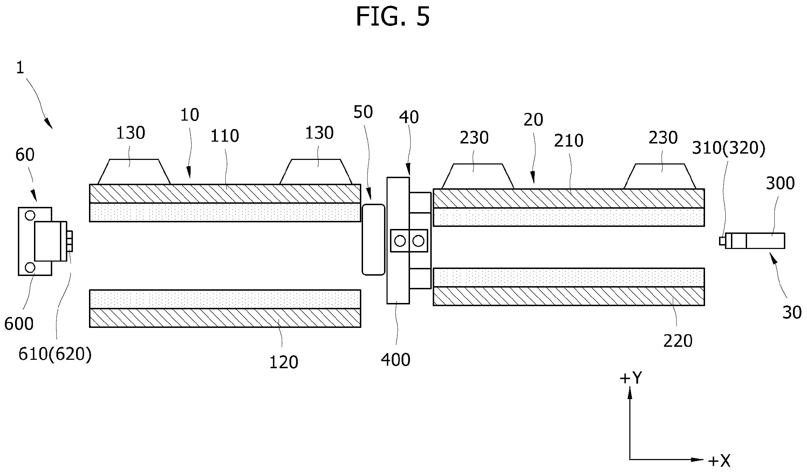

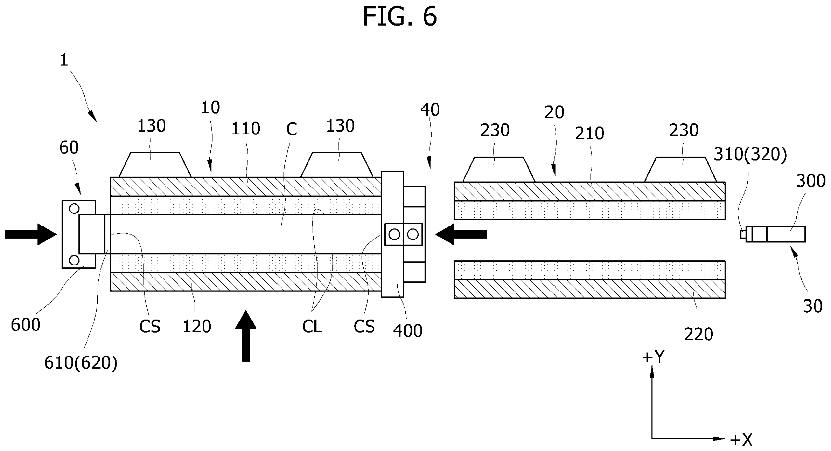

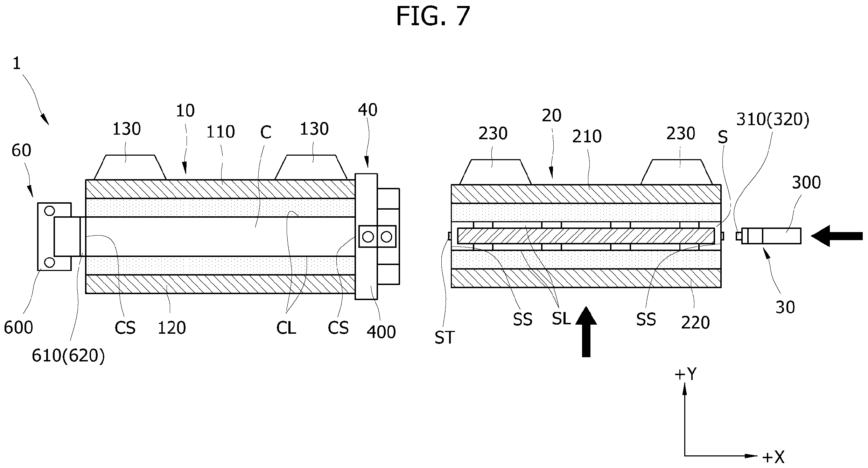

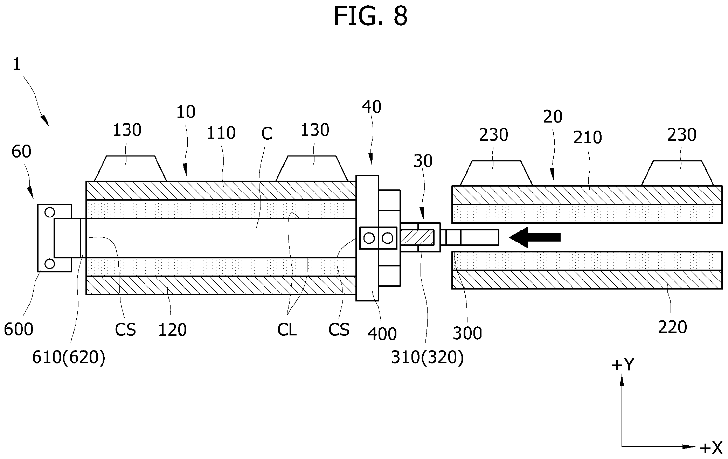

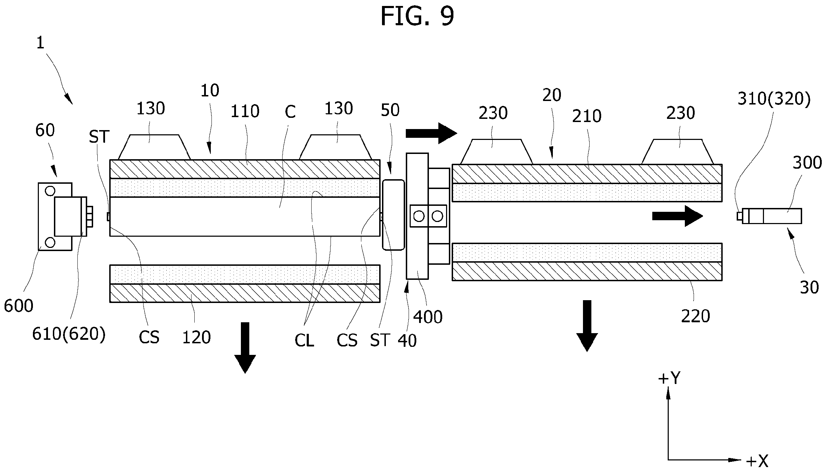

FIG. 5 is a plan view illustrating the battery manufacturing apparatus 1 in which a can C has not yet been disposed and in which a stack S has not yet been disposed (i.e., both the can gripper 10 and the stack gripper 20 are empty), FIG. 6 is a plan view illustrating the battery manufacturing apparatus 1 in which the can C is disposed in the can gripper 10, and FIG. 7 is a plan view illustrating the battery manufacturing apparatus 1 in which the stack S is disposed in the stack gripper 20. FIG. 8 is a plan view illustrating the battery manufacturing apparatus 1 in which the stack S is moved from the stack gripper 20 toward the can C, and FIG. 9 is a plan view illustrating the battery manufacturing apparatus 1 in which the stack S is completely inserted into the can C.

In FIGS. 5 to 9, in the battery manufacturing apparatus 1, the can gripper 10, the fixed can gripper part 110, the movable can gripper part 120, the can fixing part 130, the stack gripper 20, the fixed stack gripper part 210, the movable stack gripper part 220, the stack fixing part 230, the stack pusher 30, the stack pusher body 300, the first stack pressing part 310, the second stack pressing part 320, the shooting guide part 40, the shooting guide body 400, the foreign matter discharge part 50, the stack support 60, the stack support body 600, the first stack support part 610, the second stack support part 620, the can C, and the stack S are the same as in FIGS. 1 to 4. Accordingly, the descriptions of the same components will be omitted.

Referring to FIGS. 5 to 9, a process of manufacturing a battery using the battery manufacturing apparatus 1 will be described.

Referring to FIG. 5, the stack support 60, the can gripper 10, the shooting guide part 40, the stack gripper 20, and the stack pusher 30 may be sequentially disposed in one direction (e.g., in the X-axis direction). The foreign matter discharge part 50 may be disposed between the can gripper 10 and the stack gripper 20. The shooting guide part 40 may be disposed above (e.g., in a +Z-axis direction of) the foreign matter discharge part 50 or adjacent to (e.g., in the X-axis direction) the foreign matter discharge part 50.

Referring to FIG. 6, the can C may be disposed in the can gripper 10. According to an embodiment, the can C may be disposed between the fixed can gripper part 110 and the movable can gripper part 120. The movable can gripper part 120 may move toward the fixed can gripper part 110 (along the arrow), until the can C contacts (e.g., directly contacts) both the fixed can gripper part 110 and the movable can gripper part 120 to be fixed to the can gripper 10.

The stack support 60 may be disposed at one side (e.g., in the -X-axis direction) of the can C to be disposed on the short can side CS of the can C. The stack support 60 may come into contact with the stack S inserted into the can C to restrict the stack S from moving in one direction (e.g., the -X-axis direction).

The shooting guide part 40 may be disposed at the other side (e.g., in a +X-axis direction) of the can C (e.g., so the shooting guide part 40 and the stack support 60 may be at opposite ends of the can gripper 10 with the can C along the X-axis direction). The shooting guide part 40 may come into contact with the moving stack S to adjust the width (e.g., in the Y-axis direction) of the stack S. According to an embodiment, the stack S passing through the shooting guide part 40 may come into contact with the shooting guide part 40 so that the width of the stack S may be reduced.

The shooting guide part 40 may be disposed above (e.g., in the +Z-axis direction of) the foreign matter discharge part 50, and the foreign matter that is detached from the stack S passing through the shooting guide part 40 may move to the foreign matter discharge part 50. As a negative pressure is formed in the foreign matter discharge part 50, the foreign matter discharge part 50 may remove the foreign matter that is detached from the stack S or other foreign matter.

Referring to FIG. 7, the stack S may be disposed in the stack gripper 20. According to an embodiment, the stack S may be disposed between the fixed stack gripper part 210 and the movable stack gripper part 220. The movable stack gripper part 220 may move toward the fixed stack gripper part 210, so stack S may come into contact with both the fixed stack gripper part 210 and the movable stack gripper part 220, and the width (e.g., in the Y-axis direction) of the stack S may be adjusted by the stack gripper 20. The stack S may be fixed by the stack gripper 20, and may be moved by the stack pusher 30 (that comes into contact with the stack S) toward the shooting guide part 40. For example, referring to FIG. 7, a space between the movable stack gripper part 220 and the fixed stack gripper part 210 in the Y-axis direction (i.e., where the stack S is fixed) may be aligned with a space between the movable can gripper part 120 and the fixed can gripper part 110 in the Y-axis direction (i.e., where the can C is fixed).

Referring to FIG. 8, as the stack pusher 30 moves and comes into contact with the stack S, the stack S may be pushed toward and may pass through the shooting guide part 40 to be inserted into the can C in the can gripper 10. The stack pusher body 300 may come into contact with the stack S. According to an embodiment, the first stack pressing part 310 and the second stack pressing part 320 of the stack pusher 30 may come into contact with the stack S and the stack contact parts SC disposed on the stack S may come into contact with the first stack pressing part 310 and the second stack pressing part 320. Accordingly, the stack terminal ST disposed on the stack S may not be damaged.

The stack S may be moved by the stack pusher 30 and may pass through the shooting guide part 40, and the width (e.g., in the Y-axis direction) of the stack S may be reduced while the stack S passes through the shooting guide part 40. The stack S may come into contact with the shooting guide roller 410 while passing through the shooting guide part 40. The stack S may sequentially come into contact with the shooting guide first roller 411 and the shooting guide second roller 412 so that the width of the stack S may be reduced.

The stack S passing through the shooting guide part 40 may be inserted into the can C. According to an embodiment, the short stack side SS of the stack S may move toward the short can side CS of the can C. The stack S may be moved in the direction parallel to the longitudinal direction (e.g., the X-axis direction) of the can C and inserted into the can C.

The stack S inserted into the can C may come into contact with the stack support 60 disposed at one side (e.g., in the -X-axis direction) of the can C. According to an embodiment, the stack S may come into contact with the stack support body 600. The stack contact part SC disposed on the stack S may come into contact with the first stack support part 610 and/or the second stack support part 620. Accordingly, the stack terminal ST disposed on the stack S may not be damaged. When the stack S comes into contact with the stack support 60, the process of inserting the stack S into the can C may be completed.

Referring to FIG. 9, when the process of inserting the stack S into the can C is completed, the movable can gripper part 120 moves to increase the distance between the fixed can gripper part 110 and the movable can gripper part 120. According to an embodiment, the movable can gripper part 120 may move in one direction (e.g., the -Y-axis direction).

In addition, the stack support 60 may move away from the can C. According to an embodiment, the stack support 60 may move in one direction (e.g., the -X-axis direction).

In addition, the stack pusher 30 may move away from the can C. According to an embodiment, the stack pusher 30 may move in one direction (e.g., the +X-axis direction).

In addition, the shooting guide part 40 may move away from the can C. According to an embodiment, the shooting guide part 40 may move in one direction (e.g., the +X-axis direction).

In addition, the movable stack gripper part 220 may move to increase a distance between the fixed stack gripper part 210 and the movable stack gripper part 220. According to an embodiment, the movable stack gripper part 220 may move in one direction (e.g., the -Y-axis direction).

In the process illustrated in FIGS. 5 to 9, the battery manufacturing apparatus 1 can insert the stack S into the can C while minimizing damage to the can C and/or the stack S. Accordingly, a battery manufactured by the battery manufacturing apparatus 1 may have a high degree of completion, a low failure rate, and improved durability.

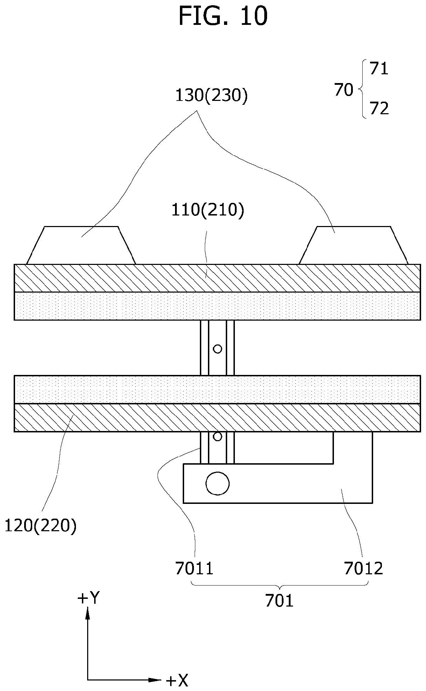

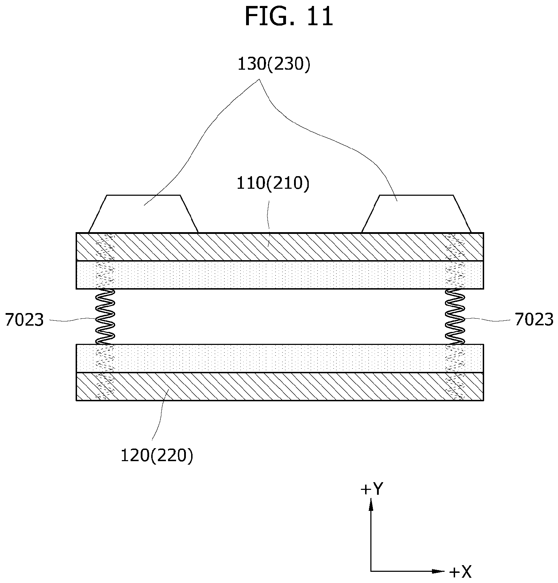

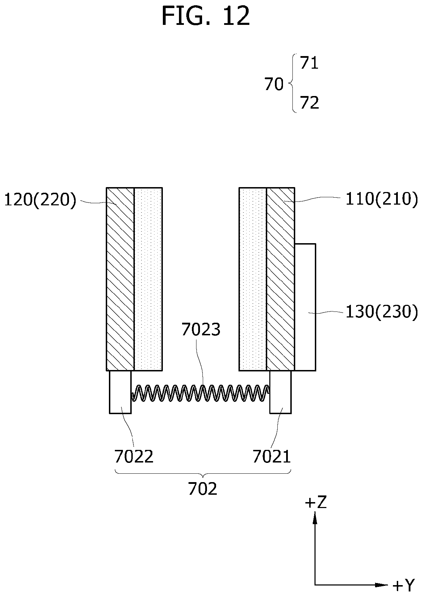

FIG. 10 is a plan view illustrating a first example of a gripper close contact part 70 connected to each of the can gripper 10 and the stack gripper 20 according to embodiments, FIG. 11 is a plan view illustrating a second example of a gripper close contact part 70 connected to each of the can gripper 10 and the stack gripper 20 according to embodiments, and FIG. 12 is a side view illustrating the second example of the gripper close contact part 70 connected to each of the can gripper 10 and the stack gripper 20 according to embodiments.

In FIGS. 10 to 12, the fixed can gripper part 110, the movable can gripper part 120, the can fixing part 130, the fixed stack gripper part 210, the movable stack gripper part 220, and the stack fixing part 230 illustrated in FIGS. 10 to 12 are the same as the fixed can gripper part 110, the movable can gripper part 120, the can fixing part 130, the fixed stack gripper part 210, the movable stack gripper part 220, and the stack fixing part 230 are the same as in FIGS. 1 to 9. Accordingly, the descriptions of the same components will be omitted.

Referring to FIGS. 10-12, a gripper close contact part 70 may be disposed on the can gripper 10 and/or the stack gripper 20, and may adjust a fixing force of the can gripper 10 for the can C and/or a fixing force of the stack gripper 20 for the stack S. The gripper close contact part 70 may include a can gripper close contact part 71 disposed on the can gripper 10 and a stack gripper close contact part 72 disposed on the stack gripper 20. If the sub-components of the gripper close contact part 70 are disposed on the can gripper 10, the can gripper close contact part 71 may be formed, and if the sub-components are disposed on the stack gripper 20, the stack gripper close contact part 72 may be formed. The sub-components of the gripper close contact part 70 will be described below with reference to FIGS. 10 to 12.

Referring to FIG. 10, the gripper close contact part 70 may include a close contact clamp part 701. The close contact clamp part 701 may be disposed on the can gripper 10 and/or the stack gripper 20. The close contact clamp part 701 may include a close contact rail 7011 and a close contact clamp body 7012.

The close contact rail 7011 may be disposed in a direction parallel to a direction of a movement path (e.g., the Y-axis direction) of the movable can gripper part 120 which moves with respect to the fixed can gripper part 110. The close contact clamp body 7012 may be connected to the movable can gripper part 120 and the close contact rail 7011. The close contact clamp body 7012 may move along the close contact rail 7011, and the movable can gripper part 120 connected to the close contact clamp body 7012 may move along the close contact rail 7011.

The close contact clamp body 7012 may be fixed at a location set with respect to the close contact rail 7011. Accordingly, a distance from the movable can gripper part 120 to the fixed can gripper part 110 can change, and the movable can gripper part 120 may be fixed at a set location.

A structure in which the close contact clamp part 701 is disposed on the can gripper 10 is the same as a structure in which the close contact clamp part 701 is disposed on the stack gripper 20. Accordingly, the description in which the close contact clamp part 701 is disposed on the fixed stack gripper part 210 and the movable stack gripper part 220 of the stack gripper 20 will be omitted.

Referring to FIGS. 11 and 12, the gripper close contact part 70 may include an elastic close contact part 702 disposed in the can gripper 10 and/or the stack gripper 20. The elastic close contact part 702 may include a fixed elastic close contact part 7021, a movable elastic close contact part 7022, and an elastic close contact pressing part 7023 (e.g., a presser).

The elastic close contact pressing part 7023 may connect the fixed can gripper part 110 and the movable can gripper part 120. A tensile force may be generated by the elastic close contact pressing part 7023, which may move the movable can gripper part 120 toward the fixed can gripper part 110. The can C may be disposed between the fixed can gripper part 110 and the movable can gripper part 120, and even if the fixed can gripper part 110 and the movable can gripper part 120 are spaced apart from each other, the movable can gripper part 120 may be pressed against the can C toward the fixed can gripper part 110 by the elastic close contact pressing part 7023.

The elastic close contact pressing part 7023 may be provided as a member having an elastic force, e.g., may include components generating a tensile force. For example, the elastic close contact pressing part 7023 may be a spring.

The elastic close contact pressing part 7023 may be connected to the fixed elastic close contact part 7021 connected to the fixed can gripper part 110 and the movable elastic close contact part 7022 connected to the movable can gripper part 120. Accordingly, the elastic close contact pressing part 7023 may act to reduce the distance between the fixed elastic close contact part 7021 and the movable elastic close contact part 7022.

The positions of the fixed elastic close contact part 7021 and the movable elastic close contact part 7022 may be variously implemented. For example, the fixed elastic close contact part 7021 may be disposed under (e.g., in the -Z-axis direction of) the fixed can gripper part 110, and the movable elastic close contact part 7022 may be disposed under (e.g., in the -Z-axis direction of) the movable can gripper part 120.

A structure in which the elastic close contact part 702 is disposed on the can gripper 10 is the same as a structure in which the elastic close contact part 702 is disposed on the stack gripper 20. Accordingly, the description of a structure in which the elastic close contact part 702 is disposed on the fixed stack gripper part 210 and the movable stack gripper part 220 of the stack gripper 20 will be omitted.

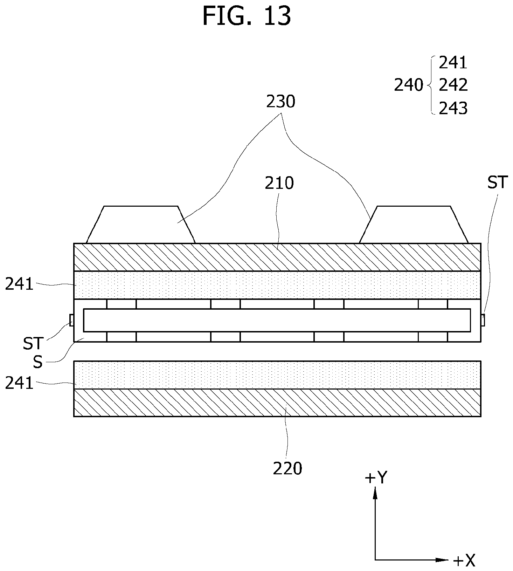

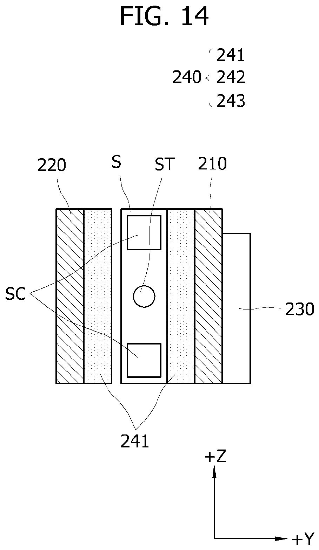

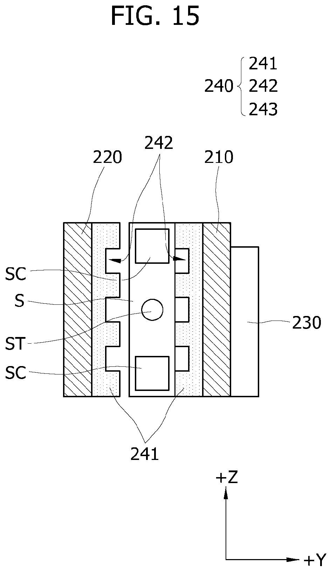

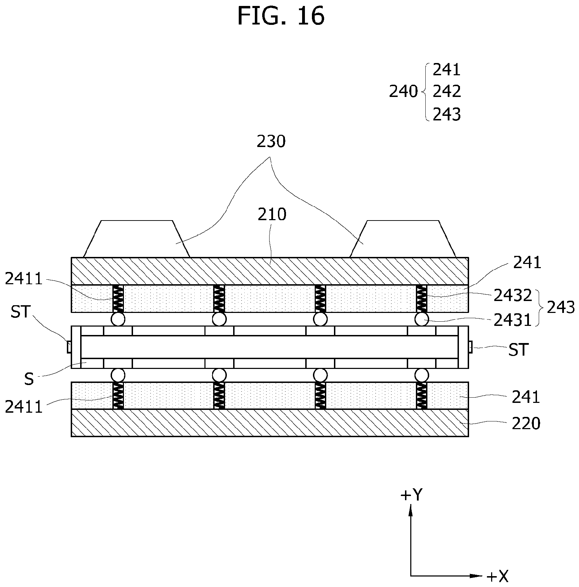

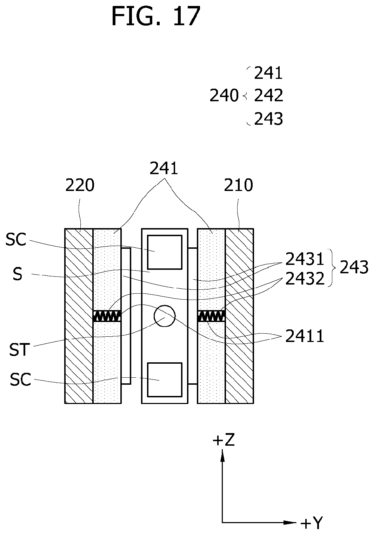

FIG. 13 is a plan view illustrating a first example of a stack friction reducing part disposed 240 in the stack gripper 20 according to embodiments, FIG. 14 is a side view illustrating the first example of the stack friction reducing part 240 disposed in the stack gripper 20 according to embodiments, FIG. 15 is a side view illustrating a second example of the stack friction reducing part 240 disposed in the stack gripper 20 according to embodiments, FIG. 16 is a plan view illustrating a third example of the stack friction reducing part 240 disposed in the stack gripper 20 according to embodiments, and FIG. 17 is a side view illustrating the third example of the stack friction reducing part 240 disposed in the stack gripper 20 according to embodiments.

The fixed stack gripper part 210, the movable stack gripper part 220, and the stack fixing part 230 illustrated in FIGS. 13 to 17 are the same as the fixed stack gripper part 210, the movable stack gripper part 220, and the stack fixing part 230 illustrated in FIGS. 1 to 12. Accordingly, the descriptions of the same components will be omitted.

Referring to FIGS. 13 to 17, a stack friction reducing part 240 (e.g., a stack friction reducer) may be disposed in the stack gripper 20 and may reduce friction between the stack S and the stack gripper 20. The stack friction reducing part 240 may include different structures, e.g., a stack friction reducing surface 241, an uneven stack friction reducing part 242, and/or a stack friction reducing roller part 243.

For example, referring to FIGS. 13 and 14, the stack friction reducing surface 241 may be disposed in the stack gripper 20. The stack friction reducing surface 241 may be disposed on each of the fixed stack gripper part 210 and the movable stack gripper part 220 (e.g., the stack friction reducing surface 241 may continuously cover the entirety of each of the surfaces of the fixed stack gripper part 210 and the movable stack gripper part 220 that face each other). The stack friction reducing surfaces 241 disposed on the fixed stack gripper part 210 and the movable stack gripper part 220 may be disposed to face each other.

The stack friction reducing surfaces 241 may be disposed at both sides (e.g., in the +Y-axis direction and the -Y-axis direction) of the stack S and may come into contact with the stack S. The stack friction reducing surface 241 may include a material which generates a small amount friction with the stack S, e.g., polytetrafluoroethylene, polypropylene pellets, and polyamide pellets.

In another example, referring to FIG. 15, the uneven stack friction reducing part 242 may be disposed in the stack gripper 20. The uneven stack friction reducing part 242 may be disposed on the fixed stack gripper part 210 and the movable stack gripper part 220 and may come into contact with the stack S. The uneven stack friction reducing part 242 may be provided in an uneven shape to reduce a contact area between the stack gripper 20 and the stack S. As the contact area between the stack gripper 20 and the stack S is reduced due to the uneven stack friction reducing part 242, friction occurring between the stack gripper 20 and the stack S can be reduced.

According to an embodiment, the uneven stack friction reducing part 242 may be disposed in the stack friction reducing surface 241 disposed on each of the fixed stack gripper part 210 and the movable stack gripper part 220. Accordingly, the friction occurring between the stack gripper 20 and the stack S can be further reduced.

In yet another example, referring to FIGS. 16 and 17, the stack friction reducing roller part 243 may be disposed in the stack gripper 20. The stack friction reducing roller part 243 may be disposed on each of the fixed stack gripper part 210 and the movable stack gripper part 220 and may come into contact with the stack S. The stack friction reducing roller part 243 may include a stack friction reducing roller 2431 and a stack friction reducing roller pressing member 2432.

The stack friction reducing roller 2431 may be provided as a plurality of stack friction reducing rollers 2431. The stack friction reducing rollers 2431 may be disposed at both sides (e.g., in the +Y-axis direction and the -Y-axis direction) of the stack S and may come into contact with the stack S. The plurality of stack friction reducing rollers 2431 may be disposed to face each other.

The stack friction reducing roller 2431 may rotate (e.g., rotate about its own axis), and as the stack friction reducing roller 2431 rotates, friction between the stack friction reducing roller 2431 and the stack S may be reduced. In addition, as the stack friction reducing roller 2431 comes into contact with the stack S, a contract area between the stack gripper 20 and the stack S may be reduced. Accordingly, friction between the stack gripper 20 and the stack S can be reduced.

The stack friction reducing roller pressing member 2432 may press the stack friction reducing roller 2431 against the stack S. The stack friction reducing roller pressing member 2432 may be provided as an elastic member generating a compressive force. According to an embodiment, the stack friction reducing roller pressing member 2432 may be provided as a spring generating a compressive force. The stack friction reducing roller pressing member 2432 is not limited to the spring and may include various components generating a compressive force.

The stack friction reducing roller pressing member 2432 may be disposed on each of the fixed stack gripper part 210 and the movable stack gripper part 220. The stack friction reducing roller pressing member 2432 may press the stack friction reducing roller 2431 toward the stack S from each of the fixed stack gripper part 210 and the movable stack gripper part 220.

The stack friction reducing surfaces 241 may be disposed on the fixed stack gripper part 210 and the movable stack gripper part 220. A stack friction reducing hole 2411 passing through the stack friction reducing surface 241 may be provided. The stack friction reducing hole 2411 may be provided as a plurality of stack friction reducing holes 2411.

The stack friction reducing roller pressing member 2432 may be disposed in the stack friction reducing hole 2411. The stack friction reducing roller pressing member 2432 may be connected to the stack friction reducing roller 2431. The stack friction reducing roller pressing member 2432 may be connected to each of the fixed stack gripper part 210 and/or the movable stack gripper part 220.

As described above, as the stack friction reducing roller pressing member 2432 presses the stack friction reducing roller 2431 through the stack friction reducing hole 2411, even if the stack S is biased to one side (e.g., in the +Y-axis direction or the -Y-axis direction) due to a defect of the stack friction reducing roller pressing member 2432, the stack S may come into contact with the stack friction reducing surface 241, thereby minimizing damage to the stack S.

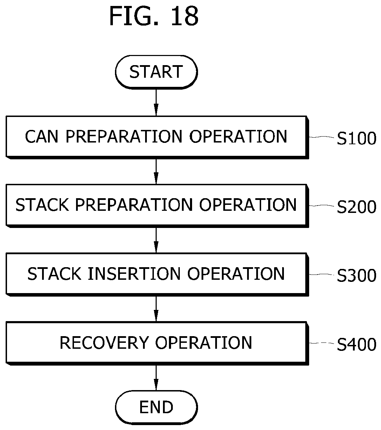

FIG. 18 is a flowchart illustrating a method of manufacturing a battery according to an embodiment.

Referring to FIG. 18, the method of manufacturing a battery may include a can preparation operation S100 (in which the can C is disposed in the can gripper 10), a stack preparation operation S200 (in which the stack S is disposed in the stack gripper 20 that is at one side of the can gripper 10), and a stack insertion operation S300 (in which the stack S is inserted into the can C using the stack pusher 30 which comes into contact with the stack S). The method of manufacturing a battery may further include a recovery operation S400 (in which the can C into which the stack S is inserted is separated from the can gripper 10 and the stack gripper 20 and the stack pusher 30 are moved away from the can gripper 10).

In the can preparation operation S100, the can C may be fixed to the can gripper 10 by the gripper close contact part 70 disposed in the can gripper 10. According to an embodiment, the can C can be fixed to the can gripper 10 by the can gripper close contact part 71 disposed in the can gripper 10.

In the stack preparation operation S200, the stack S can be fixed to the stack gripper 20 by the gripper close contact part 70 disposed in the stack gripper 20. According to an embodiment, the stack S may be fixed to the stack gripper 20 by the stack gripper close contact part 72 disposed in the stack gripper 20.

In the stack preparation operation S200, the stack friction reducing part 240 disposed in the stack gripper 20 may come into contact with the stack S. Friction between the stack friction reducing part 240 and the stack S may be minimized, and thus damage to the stack S can be minimized.

In the stack insertion operation S300, the stack S may pass through the shooting guide part 40. The shooting guide part 40 may be disposed between the can gripper 10 and the stack gripper 20 and may guide the stack S to be inserted into the can C. As the stack S passes through the shooting guide part 40, the stack S may be precisely inserted into the can C, and damage to the stack S can be minimized.

In the stack insertion operation S300, the foreign matter that is detached from the stack S may be suctioned by the foreign matter discharge part 50 disposed between the can gripper 10 and the stack gripper 20. As the foreign matter is suctioned into the foreign matter discharge part 50 due to the negative pressure generated by the foreign matter discharge part 50, in a battery manufactured by the battery manufacturing apparatus 1, the degree of completion can be improved, and a failure rate can be reduced.

In the stack insertion operation S300, the stack support 60 disposed at one side (for example, in the -X-axis direction) of the can gripper 10 may come into contact with the stack S inserted into the can C to restrict the stack S from moving in one direction (for example, the -X-axis direction). Accordingly, the stack S can be accurately disposed at a location desired by the worker in the can C.

By way of summation and review, there are many ways to insert an electrode assembly into a can of a secondary battery, e.g., the electrode assembly may be inserted into the can from top to bottom or inserted into the can from the side. If the electrode assembly is inserted into the can from the side, since the electrode assembly may be pressed during insertion into the can, the electrode assembly may be damaged and foreign matter may be introduced into the can during the insertion process. Accordingly, a battery manufacturing apparatus and method for minimizing damage to an electrode assembly, which may occur while the electrode assembly is inserted into a can from the side of the can, and minimizing the introduction of foreign matter into the can are desired.

In contrast, embodiments are directed to providing a battery manufacturing apparatus and method for minimizing damage to a stack during a battery manufacturing process. In addition, embodiments are directed to providing a battery manufacturing apparatus and method for minimizing the introduction of foreign matter into a can during a battery manufacturing process. Further, a failure rate of batteries can be minimized using the battery manufacturing apparatus and method according to embodiments.

Embodiments are set out in the following clauses:
Clause 1. A battery manufacturing apparatus comprising: a can gripper which comes into contact with and is fixed to a can; a stack gripper which is disposed at one side of the can gripper and fixes a stack inserted into the can; and a stack pusher which comes into contact with the stack and moves the stack to the can.
Clause 2. The battery manufacturing apparatus of Clause 1, wherein: the can includes long can sides disposed to face each other and short can sides connecting the long can sides and disposed to face each other; and the can gripper comes into contact with the long can sides.
Clause 3. The battery manufacturing apparatus of Clause 1, wherein the stack includes: a long stack side that comes into contact with the stack gripper; and a short stack side that comes into contact with the stack pusher.
Clause 4. The battery manufacturing apparatus of Clause 1, further comprising a shooting guide part which is disposed between the can gripper and the stack gripper and guides the stack to be inserted into the can.
Clause 5. The battery manufacturing apparatus of Clause 4, wherein: the shooting guide part includes a plurality of shooting guide rollers disposed to face each other; and a distance between the facing shooting guide rollers decreases from the stack gripper to the can gripper.
Clause 6. The battery manufacturing apparatus of Clause 1, wherein the can gripper includes: a fixed can gripper part; and a movable can gripper part which is disposed to face the fixed can gripper part and moves toward or away from the fixed can gripper part.
Clause 7. The battery manufacturing apparatus of Clause 6, wherein the can gripper: includes a can fixing part which fixes the fixed can gripper part; and further includes a can gripper close contact part which moves the movable can gripper part toward the fixed can gripper part.
Clause 8. The battery manufacturing apparatus of Clause 1, wherein the stack gripper includes: a fixed stack gripper part; and a movable stack gripper part which is disposed to face the fixed stack gripper part and moves toward or away from the fixed stack gripper part.
Clause 9. The battery manufacturing apparatus of Clause 8, wherein the stack gripper: includes a stack fixing part which fixes the fixed stack gripper part; and further includes a stack gripper close contact part which moves the movable stack gripper part toward the fixed stack gripper part.
Clause 10. The battery manufacturing apparatus of Clause 8, further comprising a stack friction reducing part which is formed on the fixed stack gripper part and the movable stack gripper part and reduces friction between the stack gripper and the stack.
Clause 11. The battery manufacturing apparatus of Clause 1, further comprising a foreign matter discharge part which is disposed between the can gripper and the stack gripper and suctions foreign matter that is detached from the stack.
Clause 12. The battery manufacturing apparatus of Clause 11, wherein the foreign matter discharge part generates a negative pressure to suction the foreign matter.
Clause 13. The battery manufacturing apparatus of Clause 1, further comprising a stack support which is disposed at the other side of the can gripper and comes into contact with the stack inserted into the can to restrict movement of the stack.
Clause 14. The battery manufacturing apparatus of Clause 13, wherein: the stack includes a stack terminal; and the stack support is spaced apart from the stack terminal and comes into contact with the stack.
Clause 15. The battery manufacturing apparatus of Clause 1, wherein: the stack includes a stack terminal; and the stack pusher is spaced apart from the stack terminal and comes into contact with the stack.
Clause 16. A battery manufacturing method comprising: a can preparation operation in which a can is disposed in a can gripper; a stack preparation operation in which a stack is disposed in a stack gripper disposed at one side of the can gripper; and a stack insertion operation in which the stack is inserted into the can using a stack pusher that comes into contact with the stack.
Clause 17. The battery manufacturing method of Clause 16, wherein, in the stack insertion operation, the stack passes through a shooting guide part which is disposed between the can gripper and the stack gripper and guides the stack to be inserted into the can.
Clause 18. The battery manufacturing method of Clause 16, wherein, in the stack insertion operation, foreign matter that is detached from the stack is suctioned by a foreign matter discharge part disposed between the can gripper and the stack gripper.
Clause 19. The battery manufacturing method of Clause 16, wherein, in the stack insertion operation, a stack support disposed at the other side of the can gripper comes into contact with the stack inserted into the can to restrict movement of the stack.
Clause 20. The battery manufacturing method of Clause 16, wherein, in the stack insertion operation, the stack comes into contact with a stack friction reducing part disposed in the stack gripper to reduce friction between the stack and the stack gripper.

Example embodiments have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from the scope of the present invention as set forth in the following claims.

## Claims

1. A battery manufacturing apparatus, comprising:
a can gripper configured to contact and fix a can;
a stack gripper disposed at a side of the can gripper, the stack gripper being configured to fix a stack to be inserted into the can; and
a stack pusher, the stack pusher being configured to contact the stack and to move the stack towards the can gripper.

2. The battery manufacturing apparatus as claimed in claim 1, wherein:
the can includes long sides facing each other and short sides facing each other, the short sides of the can connecting the long sides of the can to each other; and
the can gripper is configured to contact the long sides of the can.

3. The battery manufacturing apparatus as claimed in claim 1 or 2, wherein:
the stack gripper is configured to contact
a long side of the stack; and
the stack pusher is configured to contact a short side of the stack.

4. The battery manufacturing apparatus as claimed in claim 1, 2 or 3, further comprising a shooting guide between the can gripper and the stack gripper, the shooting guide being configured to guide the stack into the can.

5. The battery manufacturing apparatus as claimed in claim 4, wherein the shooting guide includes a shooting guide roller,
and wherein optionally the shooting guide includes a plurality of shooting guide rollers facing each other, a distance between the shooting guide rollers decreasing in a direction oriented from the stack gripper towards the can gripper.

6. The battery manufacturing apparatus as claimed in any preceding claim, wherein the can gripper includes:
a fixed can gripper; and
a movable can gripper facing the fixed can gripper, the movable can gripper being configured to move towards or away from the fixed can gripper.

7. The battery manufacturing apparatus as claimed in claim 6, wherein the can gripper further includes:
a can fixer configured to fix the fixed can gripper; and
a can gripper close contact configured to move the movable can gripper toward the fixed can gripper.

8. The battery manufacturing apparatus as claimed in any preceding claim, wherein the stack gripper includes:
a fixed stack gripper; and
a movable stack gripper facing the fixed stack gripper, the movable stack gripper being configured to move toward or away from the fixed stack gripper,
and wherein optionally the stack gripper further includes:
a stack fixer configured to fix the fixed stack gripper; and
a stack gripper close contact configured to move the movable stack gripper toward the fixed stack gripper.

9. The battery manufacturing apparatus as claimed in claim 7 or 8, further comprising a stack friction reducer on the fixed stack gripper and the movable stack gripper, the stack friction reducer being configured to reduce friction between the stack gripper and the stack.

10. The battery manufacturing apparatus as claimed in any preceding claim, further comprising a foreign matter discharger between the can gripper and the stack gripper, the foreign matter discharger being configured to generate a negative pressure so as to suction foreign matter that has detached from the stack,
and wherein optionally the foreign matter discharger is a vacuum pump configured to generate the negative pressure.

11. The battery manufacturing apparatus as claimed in any preceding claim, further comprising a stack support at the other side of the can gripper to the stack gripper, the stack support configured to contact the stack so as to restrict movement of the stack.

12. The battery manufacturing apparatus as claimed in claim 11, wherein the stack support is configured to be spaced apart from a stack terminal when contacting the stack.

13. The battery manufacturing apparatus as claimed in any preceding claim, wherein the stack pusher is configured to be spaced apart from a stack terminal of the stack when contacting the stack.

14. A battery manufacturing method, comprising:
a can preparation operation in which a can is disposed in a can gripper;
a stack preparation operation in which a stack is disposed in a stack gripper, the stack gripper disposed at one side of the can gripper; and
a stack insertion operation in which the stack is inserted into the can using a stack pusher, the stack pusher contacting the stack and pushing the stack into the can.

15. The battery manufacturing method as claimed in claim 14, wherein the stack insertion operation comprises at least one of:
passing the stack through a shooting guide between the can gripper and the stack gripper, the shooting guide guiding the stack to be inserted into the can;
suctioning foreign matter that has detached from the stack using a foreign matter discharger between the can gripper and the stack gripper;
contacting the stack with a stack support disposed at the other side of the can gripper to the stack gripper so as to restrict movement of the stack;
contacting the stack with a friction reducing part disposed in the stack gripper so as to reduce friction between the stack and the stack gripper.
